Europäisches Patentamt

European Patent Office

Office européen des brevets

(11) Veröffentlichungsnummer: **0 335 129**
**A1**

## (12) EUROPÄISCHE PATENTANMELDUNG

(21) Anmeldenummer: 89103813.5

(22) Anmeldetag: 04.03.89

(51) Int. Cl.4: **B60T 7/08** , **F16C 1/20**

(30) Priorität: 31.03.88 DE 3810948

(43) Veröffentlichungstag der Anmeldung:
04.10.89 Patentblatt 89/40

(84) Benannte Vertragsstaaten:
AT DE FR IT

(71) Anmelder: Xaver Fendt & Co.
Johann-Georg-Fendt-Strasse 4
D-8952 Marktoberdorf(DE)

(72) Erfinder: Mayer, Jakob
Hauptstrasse 10
D-8951 Ruderatshofen(DE)

(54) Handbremshebel für Kraftfahrzeuge.

(57) Bei der Gestaltung von Handbremshebeln für Kraftfahrzeuge, insbesondere für Ackerschlepper, ist der Konstrukteur bezüglich der Gestaltung des Teils des Handbremshebels, der durch den Boden in den Fahrerstand hineinragt, erheblichen Beschränkungen ausgesetzt, da die bisher bekannten Übertragungsmittel für die Bewegung des Druckknopfes zur Entriegelung der Handbremse zur Verriegelungsklinke eine bestimmte Formgebung dieses Gestängeteils verlangen. Der neue Handbremshebel (1) soll demgegenüber mit einem übertragungselement (19) ausgerüstet sein, welches eine beliebige Gestaltung des Zwischenteils (2) zuläßt.

Um dies zu erreichen ist das Übertragungselement ein druckfester, aber biegeweicher Körper.

Ausrüstung von Nutzfahrzeugen.

EP 0 335 129 A1

## Handbremshebel für Kraftfahrzeuge

Die Erfindung betrifft einen Handbremshebel für Kraftfahrzeuge, insbesondere für Ackerschlepper, bestehend aus einem auf ein Stellglied der Bremse des Fahrzeuges einwirkenden Bremshebelteil, einem gekrümmten, rohrförmigen Zwischenteil der durch den Boden des Fahrerstandes in den Bereich des Fahrersitzes hineinragt, sowie einem rohrförmigen Griffteil, in dem ein gegen die Kraft einer Rückholfeder axial verschiebbarer Druckknopf geführt ist, dessen Bewegung über ein im Innern des Zwischenteils geführtes Übertragungselement einer Verriegelungsklinke mitgeteilt wird.

Bei einem aus der DE-OS 22 26 967 bekannten Handbremshebel befindet sich die Rückholfeder für den Druckknopf ebenfalls im Griffteil, der deshalb aus einem geraden Rohrstück hergestellt ist. Mit dem annähernd vertikal aus dem Boden des Fahrerstandes herausragenden Mittelteil bildet der aus ergonomischen Gründen annähernd parallel zum Boden des Fahrerstandes verlaufende Griffteil einen rechten Winkel, was nicht nur einen optisch ungünstigen Eindruck vermittelt, sondern wegen nicht zu vermeidender scharfer Kanten auch eine gewisse Verletzungsgefahr darstellt. Der Zwischenteil ist kreisbogenförmig gestaltet und mit dem Bremshebelteil fest verbunden derart, daß der Mittelpunkt des Kreisbogens des Zwischenteils mit der Schwenkachse des Bremshebelteils zusammenfällt. Dies hat den Vorteil, daß die Durchtrittsöffnung für den Zwischenteil im Boden des Fahrerstandes nicht wesentlich größer sein braucht als der Querschnitt des Zwischenteils. Allerdings hat die bekannte Gestaltung des Zwischenteils den Nachteil, daß sich der Griffteil beim Anziehen bzw. Lösen des Handbremshebels nicht unwesentlich in Fahrzeuglängsrichtung verschiebt, was es insbesondere beim Anziehen der Handbremse dem Fahrer erschwert, die Kraft seines Armes vollkommen zur Geltung zu bringen. Die Übertragung der Bewegung des Druckknopfes auf die Verriegelungsklinke, mit der der Handbremshebel in der angezogenen Stellung arretiert ist, erfolgt über einen im Eckbereich zwischen dem Griffteil und dem Zwischenteil angeordneten Winkelhebel der mit einer im Innern des Zwischenteils geführten, mit gleichem Krümmungsradius wie dieser gebogenen Stange in Verbindung steht, und weiter über eine am Bremshebelteil schwenkbar gelagerte Platte sowie einen sich daran anschließenden weiteren Gestängeteil. Diese Art der Weiterleitung der Bewegung des Druckknopfes eignet sich jedoch nur für über ihre gesamte Länge gleichmäßig geformte Zwischenteile. Auch ist es aus ergonomischen Gründen erwünscht, die Bewegungsbahn des Griffteils beim Anziehen des Handbremshebels günstiger als bisher zum Fahrer zu positionieren. Es hat sich gezeigt, daß dies in weiten Grenzen möglich ist, wenn der Mittelteil gelenkig mit dem Bremshebelteil verbunden ist und je nach den gegebenen Umständen speziell gestaltet ist. In diesem Falle ist es jedoch nicht mehr möglich, die Bewegung des Druckknopfes in der bekannten Weise auf die Verriegelungsklinke zu übertragen.

Von dem aufgezeigten Stand der Technik ausgehend ist es die Aufgabe der Erfindung, einen Handbremshebel zu schaffen, bei dem die Bewegung des Druckknopfes unabhängig von der Gestalt des Zwischenteils des Handbremshebels in technisch einfacher Weise der Verriegelungsklinke mitgeteilt wird. Zur Lösung dieser Aufgabe ist das Übertragungselement ein druckfester, biegeweicher Körper. Die Verwendung eines Übertragungselementes mit derartigen Eigenschaften hat den Vorteil, daß sich dieses jeder beliebigen vorkommenden Krümmung des Mittelteils anpaßt und so in ein und derselben Ausführung selbst bei unterschiedlichen Fahrzeugtypen zum Einsatz gelangen kann. Nach Anspruch 3 kann außerdem der Zwischenteil mit dem Griffteil einstückig ausgeführt werden, wodurch der Übergang zwischen diesen beiden Teilen mit einem großen Krümmungsradius versehen werden kann, so daß der Handbremshebel nicht nur ein gefälliges Aussehen erhält, sondern auch einfacher herstellbar ist.

Weitere vorteilhafte Einzelheiten und Merkmale der Erfindung sind in den übrigen Ansprüchen wiedergegeben.

Die Erfindung wird im folgenden anhand einer Zeichnung, die den Durchbruchbereich des Handbremshebels durch den Boden des Fahrerstandes eines Fahrzeuges zeigt, näher erläutert.

Der erfindungsgemäße Handbremshebel 1 besteht im wesentlichen aus einem rohrförmigen Zwischenteil 2, der durch eine mit einer Tülle 3 ausgekleidete kreisförmige Ausnehmung im Boden 4 des Fahrerstandes hindurchgesteckt ist und in seinem oberen Endbereich unter Bildung eines kurzen geraden Griffteils 5, der annähernd parallel zum Boden 4 verläuft, abgebogen ist. Im unterhalb des Bodens 4 befindlichen Endbereich ist der Zwischenteil 2 gelenkig mit einem Bremshebelteil 6 verbunden, welcher über weitere, nicht gezeigte Bremsgestängeteile mit der Bremse des Fahrzeuges in Verbindung steht.

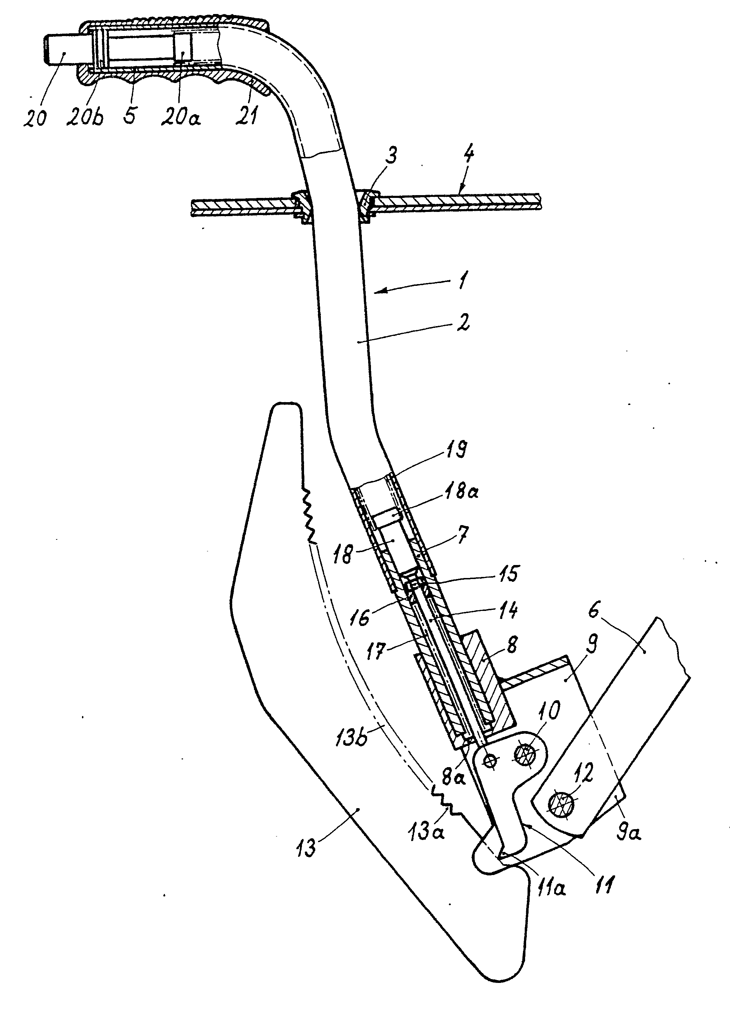

Beginnend kurz unterhalb des Griffteils 5 ist der Zwischenteil 2 sowohl in der Zeichenebene als auch senkrecht dazu mehrmals abgewinkelt. Im übrigen bleibt der Zwischenteil 2 unverformt. Diese Formgestaltung ergibt sich zum einen aus den örtlichen Gegebenheiten unterhalb des Bodens 4 des Fahrerstandes und zum anderen aus der Position des oberhalb des Bodens 4 befindlichen Fahrersitzes derart, daß der Griffteil 5 beim Anziehen des Handbremshebels 1 sich in ergonomisch günstiger Weise geringfügig bezogen auf die Fahrtrichtung nach hinten (in der Zeichnung nach rechts) verlagert und so eine bequeme Betätigung der Handbremse erlaubt.

Der unterhalb des Bodens 4 befindliche Endbereich des Zwischenteils 2 stellt einen geraden Abschnitt dar, in den ein Verlängerungsrohr 7 unlösbar eingesetzt ist. Das Verlängerungsrohr 7 ist seinerseits unlösbar in eine Sackbohrung eines Klotzes 8 eingesetzt, welcher zusammen mit einem u-förmigen Bügel 9 den unteren Endbereich des Zwischenteils 2 bildet. Die Schenkel 9a des Bügels 9 weisen nach unten und dienen sowohl zur Lagerung eines Gelenkbolzens 10, auf dem eine Verriegelungsklinke 11 verschwenkbar ist, als auch eines Gelenkbolzens 12, über den der Bremshebelteil 6 mit dem Zwischenteil 2 gelenkig verbunden ist. Unmittelbar neben dem Zwischenteil 2 ist ein fahrzeugfester Rastenträger 13 angeordnet, dessen eine Vielzahl Rasten 13a aufweisende Rastenbahn 13b den gleichen Verlauf aufweist wie die Nase 11a der Verriegelungsklinke 11 beim Anziehen des Handbremshebels 1.

Die Verriegelungsklinke 11 ist mittels einer im Verlängerungsrohr 7 geführten Auslenkstange 14 aus der gezeigten Entriegelungsstellung in eine Verriegelungsstellung schwenkbar, in der ihre Nase 11a in eine der Rasten 13a des Rastenträgers 13 eingreift. Hierzu ist die Auslenkstange 14 nach unten aus den Klotz 8 herausgeführt und in ihrem Endbereich rechtwinklig abgebogen. Der abgebogene Endbereich greift in eine seitlich vom Gelenkbolzen 10 und zu diesem parallele Bohrung in der Verriegelungsklinke 11 ein. In ihrem oberen Endbereich, der sich bis kurz vor dem oberen Ende des Verlängerungsrohres 7 erstreckt, ist die Auslenkstange 14, deren Durchmesser wesentlich geringer ist als der Innendurchmesser des Verlängerungsrohres 7, mit einem Gewinde versehen, auf dem eine Schraubenmutter 15 aufgeschraubt ist. Mit deren Hilfe ist die axiale Position eines darunter befindlichen Ringes 16 einstellbar. Der Ring 16 dient als Gegenlager für eine Rückholfeder 17, welche im gebildeten Ringraum zwischen der Auslenkstange 14 und dem Verlängerungsrohr 7 angeordnet ist und sich am Boden 8a des Klotzes 8 abstützt. Diese Rückholfeder 17 hat das Bestreben, die Verriegelungsklinke 11 im Uhrzeigersinn zu verschwenken und so in ihre Verriegelungsstellung zu bringen. In der gezeigten Position des Handbremshebels 1 ist dies jedoch noch nicht möglich, da sich die Nase 11a der Verriegelungsklinke 11 bei gelöster Handbremse unterhalb des Beginns der Rastenbahn 13b befindet.

Der obere Endbereich des Verlängerungsrohres 7 dient zur Führung eines Bolzens 18, dessen Kopf 18a mit einem Gewinde versehen ist, auf das der eine Endbereich einer Zugfeder 19 aufgeschraubt ist. Die Zugfeder 19 erstreckt sich durch den gesamten Zwischenteil 2 bis zum Griffteil 5, wo ihr anderer Endbereich auf dem Kopf 20a eines im Griffteil 5 verschiebbar gelagerten Druckknopfes 20 aufgeschraubt ist. Der Druckknopf 20 ist zwischen zwei Stellungen verschiebbar, wobei die in der Zeichnung wiedergegebene linke Stellung der Verriegelungsstellung der Verriegelungsklinke 11 entspricht. In dieser Endlage steht sein Bund 20b noch etwas gegenüber der Stirnfläche des Griffteils 5 zurück. Gegen Herausziehen aus dem Griffteil 5 ist der Druckknopf 20 gesichert durch die Stirnfläche einer auf den Griffteil 5 aufgeschobenen und mit diesem fest verbundenen Griffhülle 21. Die andere, eingeschobene Endstellung des Druckknopfes 20 ist dann erreicht, wenn die Verriegelungsklinke 11 am Bremshebelteil 6 anliegt. Damit beim Eindrücken des Druckknopfes 20 dessen Bewegung unverzögert in voller Grösse der Verriegelungsklinke 11 mitgeteilt wird, ist die Zugfeder 19 schwach vorgespannt. Mit ihren ohne Spiel aufeinanderliegenden Windungen verhält sie sich daher beim Eindrücken des Druckknopfes 20 wie ein starrer Körper, senkrecht dazu bleibt sie aber leicht biegsam. Um die Druckfeder 19 an einem Ausknikken zu hindern, ist ferner ihr Außendurchmesser nur geringfügig geringer als die lichte Weite des Zwischenteils 2.

Beim Hochziehen des Handbremshebels 1 aus der gezeigten Position heraus rutscht die Verriegelungsklinke 11 die im unteren Bereich noch glatte Rastenbahn 13b entlang, bis ihre Nase 11a schließlich unter der Vorspannkraft der Rückholfeder 17 in eine der oberen Rasten 13a einrastet. Da zu diesem Vorgang der Druckknopf 20 nicht eingedrückt werden braucht und sich die Rückholfeder zwischen der Verriegelungsklinke 11 und der Zugfeder 19 befindet, bleibt die Zugfeder 19 hierbei ohne Funktion.

Soll die Handbremse wieder gelöst werden, so muß der Druckknopf 20 in üblicher Weise in den Griffteil 5 eingedrückt werden, wodurch sich dessen Axialbewegung der Zugfeder 19 mitteilt, die wiederum über den Bolzen 18 und die Auslenkstange 14 entgegen der Kraft der Rückholfeder 17 die Verriegelungsklinke 11 aus der eingenommenen Raste 13a herausschwenkt. In diesem Zusammenhang wird nicht wie üblich, die Fähigkeit der Zugfeder 19 zur Energiespeicherung benutzt, sondern ihre Eigenschaft, in Kraftübertragungsrichtung starr, senkrecht dazu aber äußerst biegsam zu sein. Dementsprechend ist als Übertragungselement an Stelle von schraubenförmig gewickelten Zugfedern aus z. B. Federstahl auch ein Strang aus gummielastischem Material denkbar. Anschließend kann der Handbremshebel 1 in die in der Zeichnung gezeigte Position zurückgeführt werden.

## Ansprüche

1. Handbremshebel für Kraftfahrzeuge, insbesondere für Ackerschlepper, bestehend aus einem auf ein Stellglied der Bremse des Fahrzeuges einwirkenden Bremshebelteil (6), einem gekrümmten, rohrförmigen Zwischenteil (2), der durch den Boden (4) des Fahrerstandes in den Bereich des Fahrersitzes hineinragt, sowie einem rohrförmigen Griffteil (5), in dem ein gegen die Kraft einer Rückholfeder (17) axial verschiebbarer Druckknopf (20) geführt ist, dessen Entriegelungsbewegung über ein im Innern des Zwischenteils (2) geführtes Übertragungselement einer Verriegelungsklinke (11) mitgeteilt wird,
dadurch gekennzeichnet, daß das Übertragungselement ein druckfester aber biegeweicher Körper ist.

2. Handbremshebel nach Anspruch 1,
dadurch gekennzeichnet, daß als Übertragungselement eine Zugfeder (19) mit aufeinanderliegenden Windungen dient.

3. Handbremshebel nach Anspruch 1 und 2,
dadurch gekennzeichnet, daß der Zwischenteil (2) und der Griffteil (5) einteilig ausgebildet sind und die Zugfeder (19) mit benachbarten Übertragungselementen (Druckknopf (20); Bolzen (18)) über diesen Elementen angehörende Gewindebereiche, auf die die Zugfeder (19) aufgeschraubt ist, verbunden ist.

4. Handbremshebel nach den Ansprüchen 1 bis 3,
dadurch gekennzeichnet, daß die Zugfeder (19) unter Vorspannung steht.

5. Handbremshebel nach den Ansprüchen 1 bis 4,
dadurch gekennzeichnet, daß die Rückholfeder (17) unmittelbar an einer Auslenkstange (14), die gelenkig mit der Verriegelungsklinke (11) verbunden ist, angreift.

6. Handbremshebel nach Anspruch 1,
dadurch gekennzeichnet, daß als Übertragungselement eine Druckfeder dient, deren Federkennlinie steiler ist als die der Rückholfeder (17).

Fe 1469

Europäisches Patentamt

**EUROPÄISCHER RECHERCHENBERICHT**

Nummer der Anmeldung

EP 89 10 3813

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 847 875 (GUY MOTORS)<br>* Insgesamt *<br>--- | 1 | B 60 T 7/08<br>F 16 C 1/20 |
| Y,D | DE-A-2 226 967 (FENDT)<br>* Ansprüche; Figur *<br>--- | 1 | |
| A | DE-C- 147 572 (WERMANN)<br>* Insgesamt *<br>--- | 1,2 | |
| A | FR-A- 860 447 (BOUVIER)<br>----- | | |
| | | | **RECHERCHIERTE SACHGEBIETE (Int. Cl.4)**<br><br>B 60 T 7/00<br>F 16 C 1/00<br>B 62 D 33/00 |

Der vorliegende Recherchenbericht wurde für alle Patentansprüche erstellt

| Recherchenort | Abschlußdatum der Recherche | Prüfer |
|---|---|---|
| DEN HAAG | 05-07-1989 | HARTEVELD C.D.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument